# EUROPEAN PATENT APPLICATION

(11) **EP 4 197 852 A1**
(43) Date of publication of application: **21.06.2023**
(21) Application number: 22188088.3
(22) Date of filing: 01.08.2022
(51) Int. Cl.: B60L 53/65, B60L 53/66

(54) **SYSTEM AND METHOD FOR VEHICLE CHARGING SERVICE**

(30) Priority: 14.12.2021 KR 20210179027
(71) Applicant: HYUNDAI MOTOR COMPANY, Seoul 06797 (KR); Kia Corporation, Seocho-gu Seoul 06797 (KR)
(72) Inventor: SOHN, Young Woo, 18280 Hwaseong-si, Gyeonggi-do (KR); CHO, Sang Ho, 18280 Hwaseong-si, Gyeonggi-do (KR)
(74) Representative: Isarpatent

(57) **Abstract**

A system and method for a vehicle charging service, includes a charging server configured to network with the plurality of chargers, receive a provisioning certificate identification (PCID) from outside, look up the received PCID in user information, allow charging of the charger connecting with the vehicle corresponding to the received PCID when the user information matching the received PCID is present, and updating the matching user information with the received PCID when the received PCID is a new PCID.

## Description

### BACKGROUND OF THE PRESENT DISCLOSURE

### Field of the Present Disclosure

The present disclosure relates to a system and method for a vehicle charging service to implement a plug and charge (PNC) service, which allow a charger of electric vehicles to charge conveniently and effectively.

### Description of Related Art

Recently, many eco-friendly vehicles such as electric cars, etc., are being produced, sold, and used for environmental issues and effective energy use.

Such eco-friendly vehicles employ a high-voltage and large-capacity battery charged through a charger, or consider power exchanges with external infrastructure, etc.

There has been a disadvantage in that vehicle information, payment information, etc., need to be inconveniently input every time when such an electric vehicle or the like is charged through a charger in a charging station of a parking lot.

To remove this disadvantage and promote user convenience, a plug and charge (PNC) service has recently been taken into account.

The PNC service refers to a service concept that charging is automatically performed as desired and payment is also automatically made at the same time when a user connects the vehicle and the charger by a cable or wirelessly, greatly increasing user convenience.

However, a service system that can implement the PNC service in the existing charger has not been ready yet, and it is thus difficult to popularize the PNC service even though the PNC service is convenient.

The information included in this Background of the present disclosure is only for enhancement of understanding of the general background of the present disclosure and may not be taken as an acknowledgement or any form of suggestion that this information forms the prior art already known to a person skilled in the art.

### BRIEF SUMMARY

Various aspects of the present disclosure are directed to providing a system and method for a vehicle charging service, which are effective in information security because a vehicle and a user's personal information related to payment information are safely and efficiently authenticated, and which are fast and convenient because information input is not required at charging or payment.

According to an exemplary embodiment of the present disclosure, a system for a vehicle charging service including: a plurality of chargers configured to be connected with a vehicle wiredly or wirelessly to transmit and receive data and power to or from the vehicle; and a charging server configured to network with the plurality of chargers, receive a provisioning certificate identification (PCID) from outside, look up the received PCID in user information, allow charging of the charger connecting with the vehicle corresponding to the received PCID when the user information matching the received PCID is present, and updating the matching user information with the received PCID when the received PCID is a new PCID.

When the charger connects to a vehicle, the charger may receive the PCID or vehicle authentication information including the PCID from the vehicle, and transmit the PCID or vehicle authentication information of the connected vehicle to the charging server.

The charger may charge the connected vehicle and terminate the charging based on requested charging information when the charging is allowed by the charging server.

The charging server may receive the PCID or authentication information including the PCID of the vehicle connected to the charger from the vehicle, an external terminal, or the charger.

The charging server may store user information, and the user information may include vehicle information, payment information and the PCID.

The charging server may process payment for the charging according to the payment information of corresponding user information when the charging of the charger is allowed.

The charging server may look up the received PCID in the stored user information, and process payment for the charging according to the payment information of the user information including a same PCID as the received PCID.

When the received PCID is a new PCID, the charging server may update the user information, which has been authenticated by user authentication, with the received new PCID.

The charging server may extract user information, which is required to be updated with the new PCID, by performing user authentication through an external terminal.

According to an exemplary embodiment of the present disclosure, a method of a vehicle charging service includes: by a charging server, receiving a provisioning certificate identification (PCID) from outside; by the charging server, looking up the received PCID in user information stored in the charging server; by the charging server, allowing charging of a charger connecting with a vehicle corresponding to the received PCID when the user information matching the received PCID is present; and by the charging server, updating the matching user information with the received PCID when the received PCID is a new PCID.

Before the receiving the PCID by charging server, the method may further include, by the charger, receiving the PCID or vehicle authentication information including the PCID from the vehicle when the vehicle is connected to the charger, and transmitting the PCID or vehicle authentication information of the vehicle from the charger to the charging server.

The allowing the charging of the charger by the charging server may include, by the charging server, processing payment for the charging according to payment information of the user information matching the received PCID.

After the updating the user information with the PCID by the charging server, the method may further include, by the charging server, allowing the charging of the charger connecting with the vehicle corresponding to the received PCID when the updated PCID is received again.

A system and method for a vehicle charging service according to the present disclosure are effective in information security because a vehicle and a user's personal information related to payment information are safely and conveniently authenticated.

Furthermore, after authentication is initially passed once, only a connection between a charger and a vehicle is enough to start charging without separate authentication even though the charging is continuously repeated, and payment is automatically made without separate authentication after the charging, increasing a customer's satisfaction.

Furthermore, providing a vehicle's authentication information, i.e., PCID, is safe because the security of the information is effectively maintained, the PCID is not externally exposed during the charging, and only communication between the charging server and the charger is used.

Furthermore, the system and method apply to various chargers, and it is thus unnecessary to replace the chargers for a separate PNC service, reducing social costs.

The methods and apparatuses of the present disclosure have other features and advantages which will be apparent from or are set forth in more detail in the accompanying drawings, which are incorporated herein, and the following Detailed Description, which together serve to explain certain principles of the present disclosure.

### BRIEF DESCRIPTION OF THE DRAWINGS

FIG. 1 is a block diagram of a system for a vehicle charging service according to an exemplary embodiment of the present disclosure.
FIG. 2, FIG. 3 and FIG. 4 are views exemplarily illustrating sequence of a system and method for a vehicle charging service according to various embodiments of the present disclosure.
FIG. 5 is a flowchart of a method of a vehicle charging service according to an exemplary embodiment of the present disclosure.

It may be understood that the appended drawings are not necessarily to scale, presenting a somewhat simplified representation of various features illustrative of the basic principles of the present disclosure. The specific design features of the present disclosure as included herein, including, for example, specific dimensions, orientations, locations, and shapes will be determined in part by the particularly intended application and use environment.

In the figures, reference numbers refer to the same or equivalent parts of the present disclosure throughout the several figures of the drawing.

### DETAILED DESCRIPTION

Reference will now be made in detail to various embodiments of the present disclosure(s), examples of which are illustrated in the accompanying drawings and described below. While the present disclosure(s) will be described in conjunction with exemplary embodiments of the present disclosure, it will be understood that the present description is not intended to limit the present disclosure(s) to those exemplary embodiments of the present disclosure. On the other hand, the present disclosure(s) is/are intended to cover not only the exemplary embodiments of the present disclosure, but also various alternatives, modifications, equivalents and other embodiments, which may be included within the spirit and scope of the present disclosure as defined by the appended claims.

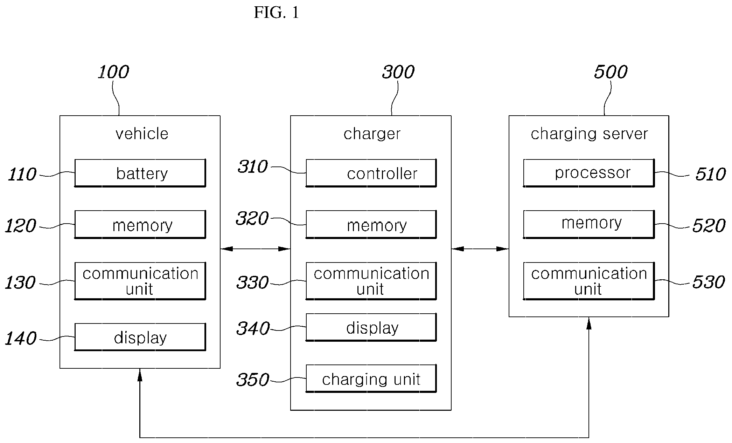

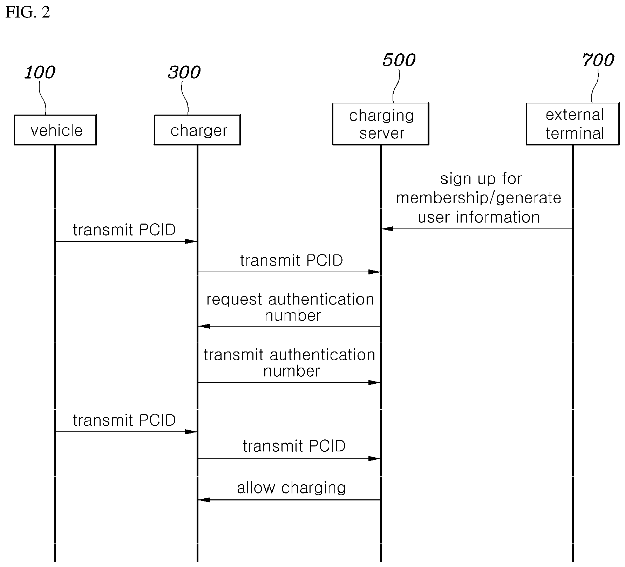

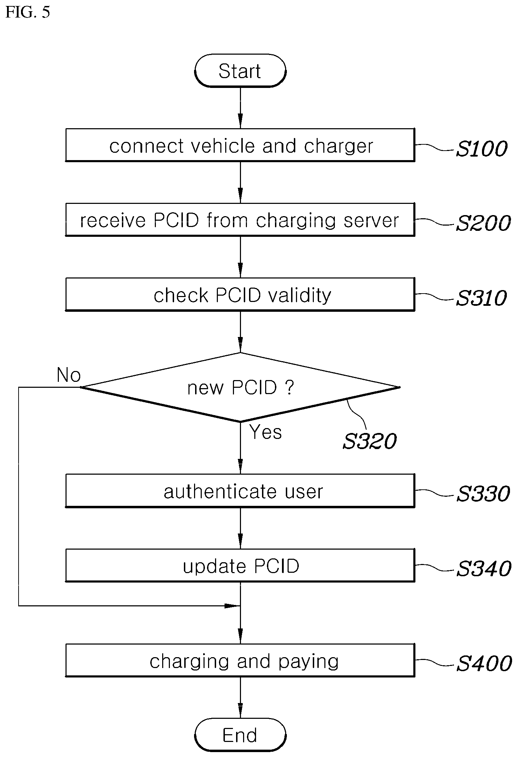

FIG. 1 is a block diagram of a system for a vehicle charging service according to an exemplary embodiment of the present disclosure, FIG. 2, FIG. 3 and FIG. 4 are views exemplarily illustrating sequence of a system and method for a vehicle charging service according to various embodiments of the present disclosure, and FIG. 5 is a flowchart of a method of a vehicle charging service according to an exemplary embodiment of the present disclosure.

A system and method for a vehicle charging service according to the present disclosure may be applied to the implementation of a plug and charge (PNC) service for an electric vehicle and the like. In the case of the PNC service for the electric vehicle, charging as much as desired is automatically performed at the same time when the vehicle and a charger are connected by a cable or wirelessly, and payment is automatically made after the charging is completed.

Therefore, it is necessary to automatically transmit both user information and vehicle information and match them when a vehicle is charged, and it is necessary to secure security by preventing an error, information leakage, etc., in an information transmission process.

To implement the PNC service, a provisioning certificate identification (PCID) is used as a code for identifying both a user and a vehicle at once. The PCID needs to be effectively and safely transmitted and processed because a vehicle and a user's payment information should be identified for automatic charging and paying so that the vehicle may be charged by a cable or wirelessly as connected to the charger by a cable or wirelessly.

In ISO standards where PNC technology is defined, it is mentioned only that a PCID code is distributed to a user. Still, it is not defined how the PIID is safely transmitted to a user authorized to receive the PCID code. The present disclosure relates to a method of transmitting and processing the PCID.

FIG. 1 is a block diagram of a system for a vehicle charging service according to an exemplary embodiment of the present disclosure. A vehicle according to the present disclosure includes an electric vehicle or the like vehicle which needs battery charging. A vehicle 100 is released with a memory 120 in which the PCID or vehicle authentication information (e.g., an original equipment manufacturing (OEM) certificate, etc.) including the PCID is stored during a production process. A user may read the PCID through a display 140 of the vehicle as necessary. Furthermore, when the vehicle 100 is connected to a charger 300 by a cable or wirelessly for the charging, the vehicle 100 transmits the PCID to a charger 300 through a communication unit 130 as requested by the charger 300 or as the connection is automatically detected.

The charger 300 includes a controller 310 and a memory 320. The memory 320 includes a nonvolatile or volatile memory, and is configured to store the received PCID temporarily. Furthermore, the charger 300 includes a communication unit 330 to transmit the PCID to a charging server 500. Furthermore, the charger 300 includes a display 340 that allows a user to input authentication information or shows a charging process. Furthermore, the charger 300 includes a charging unit 350 to charge the vehicle 100 under the control of the controller 310.

The charging server 500 includes a processor 510 and a memory 520. The memory 520 is configured to store a lot of user information. The PCID is assigned to and included in most of the user information. However, in the case of a new user, the PCID may not be assigned to his or her user information yet. Furthermore, the charging server 500 includes a communication unit 530 to directly communicate with the charger 300, an external terminal 700, or the vehicle 100.

The system for the vehicle charging service according to the present disclosure includes a plurality of chargers 300 connected to the vehicle 100 by a cable or wirelessly and configured for transmitting and receiving data and power to or from the vehicle 100. The charger 300 is not limited to one type but includes any type of charger corresponding to various models of various manufacturers. The present disclosure has an advantage in that the service and the PNC function are implemented by simple software upgrading without significant change, even in the case of various types of existing chargers.

According to the present disclosure, the charging server 500 is provided. The charging server 500 communicates with the plurality of chargers 300 through a network. Furthermore, the charging server 500 receives the PCID from the outside. Here, the charger 300 may represent the outside. While the charger 300 and the vehicle 100 are connected, the charging server 500 may receive the PCID directly from the vehicle 100 or receive the PCID through a user's mobile terminal.

The charging server 500 looks up the received PCID in stored user information. The user information is previously stored in the charging server 500. To the present end, a user needs to access the charging server 500 through various external terminals 700 such as a computer, a smartphone, etc., sign up for a membership, and input vehicle or personal information, payment information, etc. The charging server 500 searches for the received PICD in the user information previously collected and stored as above.

When the PCID is retrieved from specific user information, the charging of the charger 300 connecting with the vehicle corresponding to the PCID is allowed, then payment is made based on the payment information of the corresponding user information after the charging. Of course, a payment server may be provided separately like a credit card company, a financial company or a charging company, and the charging server 500 may serve only to relay the payment through online networking.

When the PCID received in the charging server 500 is a new PCID which is not found in the previously stored user information, the user information separately designated by user authentication or the like is required to be updated with the new PCID. In the case where the user information is updated with the new PCID, the charging may be allowed immediately after the updating, or the charging may be allowed after a user retransmits the PCID by connecting the vehicle and the charger again.

The charger 300 may receive the PCID or vehicle authentication information including the PCID from the vehicle 100 when connecting with the vehicle 100, and transmit the PCID or the vehicle authentication information of the connected vehicle 100 to the charging server 500. In other words, when the charger 300 directly receives the PCID from the vehicle 100, the PCID is transmitted to the charging server 500. When the charger 300 receives the vehicle authentication information, the PCID may be extracted from the vehicle authentication information and transmitted to the charging server 500, or the charger 300 transmits the vehicle authentication information to the charging server 500 and the charging server 500 may extract the PCID from the vehicle authentication information.

Furthermore, when charging the charger 300 is allowed by the charging server 500, the charger 300 may charge the connected vehicle 100 or terminate the charging based on requested charging information (time, capacity, etc.). After the charging is completed, the charging server 500 automatically processes the payment.

Furthermore, the charging server 500 is storing the user information, including the vehicle information, the payment information, and the PCID. Separately from the charging, the user information may be uploaded to the charging server 500 in advance by a user in person or by a vehicle manufacturer or a charging company on behalf of the user. Here, the payment information (credit card information, bank account information, etc.) needs to be previously stored according to the membership registration and charging of the user or owner of the vehicle 100.

Furthermore, when the charging of the charge 300 is allowed, the charging server 500 may process the payment for the charging based on the payment information of the corresponding user information. The charging server 500 may retrieve the received PCID from the stored user information, and process the payment for the charging based on the payment information included in the user information of which the PCID is the same as the received PCID.

Meanwhile, when the received PCID is a new PCID which is not found in the current user information, the charging server 500 may update the user information, which is authenticated by user authentication, with the new received PCID. The charging server 500 may extract user information, which is required to be updated with the new PCID, by performing user authentication through the external terminal 700.

The user authentication may be carried out using a combination of a user's phone number, social security number or the like and a disposable password or the like, etc., through various means such as a user terminal, the display of the vehicle 100, an external computer, etc.

FIG. 2, FIG. 3 and FIG. 4 show sequences of a system and method for a vehicle charging service according to various embodiments of the present disclosure.

First, FIG. 2 shows a case where the user authentication is performed through the charger 300. When the vehicle 100 and the charger 300 are connected, the charger 300 receives the PCID or the vehicle authentication information from the vehicle 100, and transmits the PCID to the charging server 500. The charging server 500 performs matching for the PCID, and requests an authentication number to the charger 300 when the PCID is identified as a new PCID as a result of the matching. A user inputs the authentication number previously provided through the display or the like of the charger 300, and the charger 300 transmits the input authentication number to the charging server 500. The charging server 500 performs the user authentication and updates the previously stored user information with the corresponding PCID when the authentication is passed. Thus, the user information of the charging server 500 is provided as complete information including the PCID. Furthermore, when the vehicle 100 and the charger 300 are connected again, the PCID is transmitted from the vehicle 100 to the charger 300, and the charger 300 transmits the PCID to the charging server 500. The charging server 500 matches the PCID with user information and allows the charging. After the charging, the payment is made based on the payment information corresponding to the matching user information.

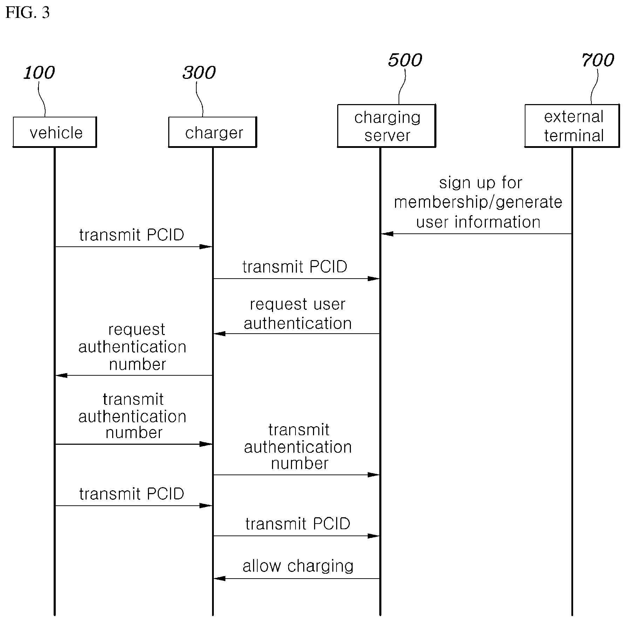

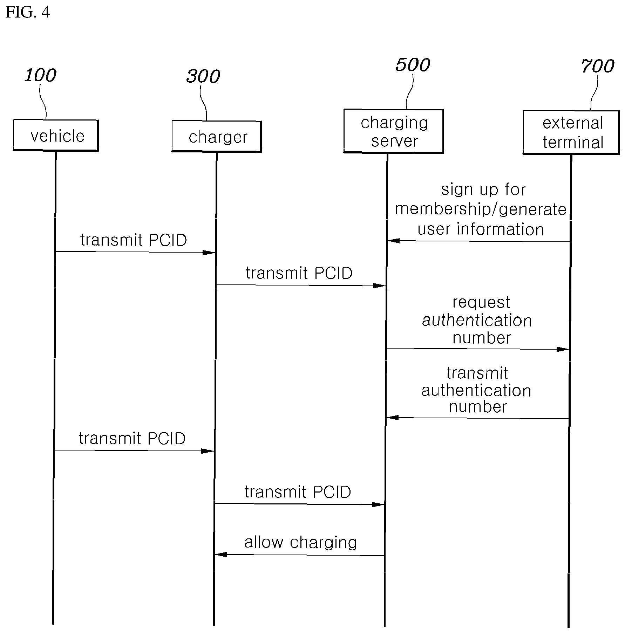

Meanwhile, FIG. 3 shows a case where the user authentication is performed in the vehicle 100. In the instant case, the vehicle 100 requests user authentication, and a user authenticates himself or herself through the display or the like of the vehicle 100 so that the PCID can match that of the user information. The other processes are the same as those of FIG. 2. Furthermore, FIG. 4 shows a case where the user authentication is performed through a user's smartphone or the like external terminal 700. When the charging server 500 identifies a new PCID, the charging server 500 requests the authentication number to the external terminal 700 based on an address, a phone number, etc. received from the charger 300 or the vehicle 100 together with the PCID and performs the authentication so that the new PCID can match that of the user information.

FIG. 5 is a flowchart of a method of a vehicle charging service according to an exemplary embodiment of the present disclosure. The method of the vehicle charging service according to the present disclosure includes the steps of, by the charging server, receiving a PCID from the outside (S200); by the charging server, looking up the received PCID in the user information stored in the charging server (S320); by the charging server, allowing the charging of the charger connecting with the vehicle of the corresponding PCID when the user information matching the received PCID is present (S400); and by the charging server, updating the matching user information with the received PCID when the received PCID is a new PCID (S340).

Before receiving the PCID (S200), the method may further include step S 100 of, by the charger, receiving the PCID or the vehicle authentication information including the PCID from the vehicle, when the vehicle is connected to the charger, and transmitting the PCID or vehicle authentication information of the vehicle from the charger to the charging server.

Furthermore, in step S400 of allowing the charging of the charger, the charging server may process the payment for the charging based on the payment information of the user information matching the received PCID.

Furthermore, after step S340 of updating the user information with the PCID, the method may further include the step S400 of allowing the charging of the charger connecting with the vehicle including the corresponding PCID when the charging server receives the updated PCID again.

In detail, the method of the vehicle charging service according to the present disclosure is as follows. First, the vehicle and the charger are connected by a cable or wirelessly (S 100). At the instant time, the PCID is transmitted in order of the vehicle - the charger - the charging server (S200). Accordingly, the charging server first identifies whether the received PCID is valid or not (S310). To the present end, the charging server may separately receive and store a valid PCID list from vehicle manufacturers. Thus, charging authentication based on an invalid PCID or a wrong PCID is prevented.

Furthermore, the charging server allows the charging and processes the payment when the received PCID matches the current user information (S320, S400). When the received PCID is a valid PCID but a new PCID, the user authentication is performed, and then the matching user information is updated with the new PCID when the authentication is passed (S330, S340). Furthermore, the vehicle and the charger are connected again, the charging is carried out after identifying whether the PCID matches the user information, and then the payment is made based on the user information (S400).

A system and method for a vehicle charging service according to the present disclosure are effective in information security because a vehicle and a user's personal information related to payment information are safely and easily authenticated.

Furthermore, after authentication is initially passed once, the only a connection between a charger and a vehicle is enough to start charging without separate authentication even though the charging is continuously repeated, and payment is automatically made without separate authentication after the charging, increasing a customer's satisfaction.

Furthermore, providing a vehicle's authentication information, i.e., PCID, is safe because the security of the information is effectively maintained, the PCID is not externally exposed during the charging, and only communication between the charging server and the charger is used.

Furthermore, the system and method apply to various chargers, and it is thus unnecessary to replace the chargers for a separate PNC service, reducing social costs.

For convenience in explanation and accurate definition in the appended claims, the terms "upper", "lower", "inner", "outer", "up", "down", "upwards", "downwards", "front", "rear", "back", "inside", "outside", "inwardly", "outwardly", "interior", "exterior", "internal", "external", "forwards", and "backwards" are used to describe features of the exemplary embodiments with reference to the positions of such features as displayed in the figures. It will be further understood that the term "connect" or its derivatives refer both to direct and indirect connection.

The foregoing descriptions of predetermined exemplary embodiments of the present disclosure have been presented for purposes of illustration and description. They are not intended to be exhaustive or to limit the present disclosure to the precise forms disclosed, and obviously many modifications and variations are possible in light of the above teachings. The exemplary embodiments were chosen and described in order to explain certain principles of the invention and their practical application, to enable others skilled in the art to make and utilize various exemplary embodiments of the present disclosure, as well as various alternatives and modifications thereof. It is intended that the scope of the present disclosure be defined by the Claims appended hereto and their equivalents.

## Claims

1. A system for a vehicle charging service, the system comprising:
a plurality of chargers configured to be connected with a vehicle wiredly or wirelessly to transmit and receive data and power to or from the vehicle; and
a charging server configured to network with the plurality of chargers, receive a provisioning certificate identification (PCID) from outside, look up the received PCID in user information, allow charging of the charger connecting with the vehicle corresponding to the received PCID when the user information matching the received PCID is present, and updating the matching user information with the received PCID when the received PCID is a new PCID.

2. The system of claim 1, wherein, when the charger connects with the vehicle, the charger is configured to receive the PCID or vehicle authentication information including the PCID from the vehicle, and to transmit the PCID or vehicle authentication information of the connected vehicle to the charging server.

3. The system of claim 1, wherein the charger is configured to charge the connected vehicle and to terminate the charging according to requested charging information when the charging is allowed by the charging server.

4. The system of claim 1, wherein the charging server is configured to receive the PCID or vehicle authentication information including the PCID of the vehicle connected to the charger from the vehicle, an external terminal or the charger.

5. The system of claim 1, wherein the charging server is configured to store user information that includes vehicle information, payment information, and the PCID.

6. The system of claim 5, wherein the charging server is configured to process payment for the charging according to the payment information of corresponding user information when the charging of the charger is allowed.

7. The system of claim 5, wherein the charging server is configured to look up the received PCID in the stored user information and to process payment for the charging according to the payment information of the user information including a same PCID as the received PCID.

8. The system of claim 1, wherein, when the received PCID is the new PCID, the charging server is configured to update the user information, authenticated by user authentication, with the received new PCID.

9. The system of claim 8, wherein the charging server is configured to extract user information, which is required to be updated with the new PCID, by performing user authentication through an external terminal.

10. A method of a vehicle charging service, the method comprising:
receiving, by a charging server, a provisioning certificate identification (PCID) from outside;
looking up, by the charging server, the received PCID in user information stored in the charging server;
allowing, by the charging server, charging of a charger connecting with a vehicle corresponding to the received PCID when the user information matching the received PCID is present; and
updating, by the charging server, the matching user information with the received PCID when the received PCID is a new PCID.

11. The method of claim 10, further including
receiving, by the charger, the PCID or vehicle authentication information including the PCID from the vehicle when the vehicle is connected to the charger, and transmitting the PCID or vehicle authentication information of the vehicle from the charger to the charging server, before the receiving the PCID by the charging server.

12. The method of claim 10, wherein the allowing the charging of the charger by the charging server includes, by the charging server, processing payment for the charging according to payment information of the user information matching the received PCID.

13. The method of claim 10, further including, by the charging server, allowing the charging of the charger connecting with the vehicle corresponding to the received PCID when the updated PCID is received again, after the updating the user information with the PCID by the charging server.

14. The method of claim 10, wherein the charging server is configured to receive the PCID or vehicle authentication information including the PCID of the vehicle connected to the charger from the vehicle, an external terminal or the charger.

15. The system of claim 10, wherein the charging server is configured to store the user information that includes vehicle information, payment information, and the PCID.
